(19) Europäisches Patentamt
European Patent Office
Office européen des brevets

(11) Veröffentlichungsnummer: **0 042 813**
**B1**

(12) # EUROPÄISCHE PATENTSCHRIFT

(45) Veröffentlichungstag der Patentschrift: **14.11.84**

(51) Int. Cl.³: **C 02 F 1/28**, B 01 J 20/22, C 08 G 12/02, C 08 G 12/40

(21) Anmeldenummer: **81810233.7**

(22) Anmeldetag: **10.06.81**

(54) **Anionisches Adsorptionsmittel, Verfahren zu seiner Herstellung und seine Verwendung zur Entfernung von kationischen Stoffen und Schwermetallionen aus wässrigen Lösungen.**

(30) Priorität: **16.06.80 CH 4616/80**

(43) Veröffentlichungstag der Anmeldung: **30.12.81 Patentblatt 81/52**

(45) Bekanntmachung des Hinweises auf die Patenterteilung: **14.11.84 Patentblatt 84/46**

(84) Benannte Vertragsstaaten: **AT BE CH DE FR GB IT LI NL SE**

(56) Entgegenhaltungen:
**BE - A - 626 115**
**FR - A - 2 314 898**
**FR - A - 2 355 541**
**GB - A - 595 368**
**GB - A - 1 092 793**
**US - A - 2 377 866**

**CHEMICAL ABSTRACTS, Band 78, Nr. 4, 29. Januar 1973, Seite 49, Nr. 17085q Columbus, Ohio, U.S.A.**
**CHEMICAL ABSTRACTS, Band 90, Nr. 24, Juni 1979, Seite 24, Nr. 187670s Columbus, Ohio, U.S.A. V. BALAKIN et al.: "Study of the reactions of polymers containing primary and secondary amino groups. 3. Study of the reaction of anion exchangers of polyethylene polyamine type with phosphorous acid and formaldehyde"**

(73) Patentinhaber: **CIBA-GEIGY AG, Postfach, CH-4002 Basel (CH)**

(72) Erfinder: **Merz, Jürg, Dr., Hochfeldweg 25, CH-4106 Therwil (CH)**
Erfinder: **Wegmüller, Hans, Dr., Kornfeldstrasse 18, CH-4125 Riehen (CH)**
Erfinder: **Wurster, Rudolf F., In der Heigenmatt 7, CH-4148 Pfeffingen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 042 813 B1

ACTORUM AG

**Beschreibung**

Die vorliegende Erfindung betrifft ein anionisches Adsorptionsmittel, das geeignet ist, kationische Stoffe und/oder Schwermetallionen aus wässerigen Lösungen, insbesondere aus Abwässern, wie z.B. Filtraten, Restflotten von Bleich- oder Färbeverfahren, Spül- und Waschwässern, zu entfernen.

Das neue Adsorptionsmittel ist dadurch gekennzeichnet, dass es durch Umsetzung einer
($a_1$) anionischen Verbindung der Formel

(1) Z-Q-CO-N-X,
            |
            Y

worin
X Wasserstoff oder $-CH_2OH$,
Y Wasserstoff, Niederalkyl oder $-CH_2OH$,
Q Alkylen mit 1 bis 8 Kohlenstoffatomen, vorzugsweise 2 bis 6 Kohlenstoffatomen und
Z den Säurerest einer mehrbasischen, anorganischen, Sauerstoff enthaltenden Säure, oder -CO-Q-Z den Säurerest einer diesen anorganischen Säurerest aufweisenden Dicarbonsäure,
wobei die Endcarboxylgruppe der Dicarbonsäure durch die Gruppe der Formel

(1a) X-N-CO-
        |
        Y

ersetzt sein kann, bedeuten oder
($a_2$) einer Melaminverbindung, welche mindestens eine N-Methylolgruppe und mindestens eine N-Sulfo-$C_1$-$C_3$-alkylgruppe oder mindestens eine sulfatierte N-Methylolgruppe aufweist
mit einem
(b) gegebenenfalls verätherten Additionsprodukt von Formaldehyd an eine Harnstoff-, Thioharnstoff- oder Amino-1,3,5-triazinverbindung
hergestellt worden ist.

Bei der Komponente (b) handelt es sich um methylolierte Amidgruppen enthaltende, jedoch keine salzbildenden anionischen Gruppen aufweisende Verbindungen. Die Komponenten ($a_1$) oder ($a_2$) enthalten mit Komponente (b) zusammen zweckmässigerweise mindestens zwei gegebenenfalls veretherte N-Methylolamidgruppen.

Dabei sind Methylolamidverbindungen der Formel (1), die nur eine einzige Gruppierung der Formel (1a) aufweisen, besonders bevorzugt. Hierzu ist Z zweckmässigerweise die Phosphorsäuregruppe und vor allem die Sulfonsäuregruppe. Der Säurerest Z liegt vorzugsweise in Salzform, z.B. als Alkalimetall- oder Ammoniumsalz vor.

Q ist vorteilhafterweise $C_1$-$C_3$-Alkylen oder bevorzugt $C_2$-$C_3$-Alkylen wie z.B. Äthylen, Propylen oder Isopropylen. Derartige Methylolamidverbindungen der Formel (1) können beispielsweise durch Umsetzung eines anorganischen Abkömmlings der schwefligen oder phosphorigen Säure mit einem Amid einer 1,2-ungesättigten aliphatischen Carbonsäure und Methylolierung des Umsetzungsproduktes mit Formaldehyd oder einem Formaldehydspender wie z.B. Paraformaldehyd oder Trioxan erhalten werden. Dabei eignen sich als Abkömmlinge der schwefligen oder phosphorigen Säure z.B. Natriumbisulfit oder Natriummetabisulfit bzw. Natriumphosphit oder ein Alkalisalz eines Phosphitmono-$C_1$-$C_5$-alkylesters und als Amide Acrylsäureamid, Methacrylsäureamid, Itaconsäureamid, Fumarsäureamid oder Maleinsäureamid.

Bevorzugt sind als Komponente ($a_1$) Methylolamidverbindungen, die der Formel

(2) $Z_1$-$Q_1$-CO-N-$CH_2OH$
                |
                Y

entsprechen, worin
$Q_1$ $C_1$-$C_3$-Alkylen oder $C_1$-$C_3$-Alkylen, das durch -COOH oder die Gruppe der Formel

(2a) -CO-N-$CH_2OH$
          |
          Y

substituiert ist und

$Z_1$ $-SO_3M$ oder 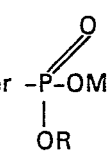

R Niederalkyl, insbesondere Methyl, oder das Kation M und M Wasserstoff, Alkalimetall z.B. Natrium oder Kalium, oder Ammonium bedeuten und Y die angegebene Bedeutung hat. Dabei sind Methylolamidverbindungen der Formel (2) besonders bevorzugt, in der $Q_1$ $C_2$-$C_3$-Alkylen, $Z_1$ $-SO_3M$ und Y Wasserstoff oder $-CH_2OH$ bedeuten. R ist vorzugsweise Wasserstoff oder Niederalkyl. M kann auch weitere Metalle z.B. Erdalkalimetalle wie Calcium oder Magnesium sowie Kupfer und Silber sein.

Als Komponente ($a_2$) können Melaminverbindungen verwendet werden, welche mindestens eine N-Methylolgruppe und mindestens eine N-Sulfo-$C_1$-$C_3$-alkylgruppe, insbesondere eine N-Sulfoethylgruppe oder mindestens eine sulfatierte N-Methylolgruppe ($-CH_2O-SO_3M$) aufweisen.

Insbesondere eignen sich N-Methylolmelamine der Formel

(3) 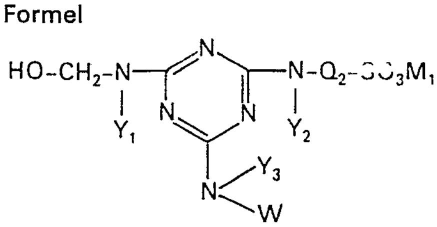

worin W Wasserstoff, $-CH_2OH$ oder $-Q_2-SO_3M_1$, Y1 Wasserstoff, Niederalkyl, $-CH_2-OH$ oder $-Q_2-SO_3M_1$,
$Y_2$ und $Y_3$, unabhängig voneinander Wasserstoff, Niederalkyl oder $-CH_2-OH$,
$Q_2$ $C_2-C_3$-Alkylen und $M_1$ Wasserstoff, Natrium, Kalium oder Ammonium bedeuten. Dabei ist $Y_1$ zweckmässigerweise Niederalkyl oder $-CH_2-OH$ und vorzugsweise Wasserstoff; $Y_2$ und $Y_3$ sind bevorzugt Wasserstoff und $Y_2$ ist vor allem Ethylen.

Bevorzugte Melaminderivate, welche als Komponente ($a_2$) in Betracht kommen, sind Hexamethylolmelamine, die eine bis fünf sulfatierte N-Methylolgruppierungen ($-CH_2-O-SO_3M_1$) aufweisen.

Niederalkyl und Niederalkoxy stellen bei der Definition der Reste der N-Methylolamid-Verbindungen in der Regel solche Gruppen dar, die 1 bis 5, insbesondere 1 bis 3 Kohlenstoffatome aufweisen, wie z.B. Methyl, Äthyl, n-Propyl, Isopropyl, n-Butyl, sek-Butyl oder Amyl bzw. Methoxy, Äthoxy oder Isopropoxy. Halogen in Verbindungen mit sämtlichen Substituenten bedeutet beispielsweise Fluor, Brom oder vorzugsweise Chlor.

Typische Vertreter von monomeren Verbindungen der Formeln (1), (2) und (3), die als Komponente ($a_1$) oder ($a_2$) verwendet werden können, sind Amidverbindungen der Formeln

(4) $NaO_3S-CH_2CH_2-CONH_2$

(5) $NaO_3S-CH_2CH_2-NH-CO-NH_2$

(6) 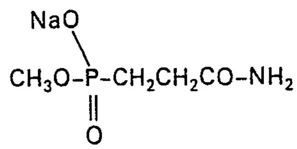 oder

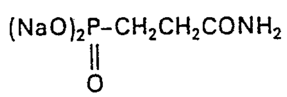 (6a)

(7) 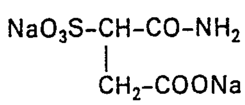

(8) $NaO_3S-CH_2-CH_2-CH_2-CO-NH_2$

und die entsprechenden mono- und dimethylolierten Amidverbindungen sowie

(9) 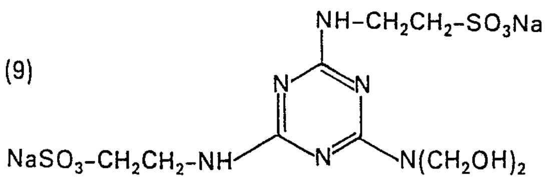

Geeignete Harnstoff- und Thioharnstoffverbindungen zur Herstellung der Komponente (b) sind Harnstoff, Thioharnstoff, substituierte Harnstoffe, wie z.B. Alkyl- oder Arylharnstoffe, Alkylenharnstoffe und -diharnstoffe wie Ethylenharnstoff, Propylenharnstoff, Dihydroxyethylenharnstoff, Hydroxypropylenharnstoff und Acetylendiharnstoff, ferner Dicyandiamid, Dicyandiamidin, Urone und Hexahydropyrimidone.

Als Amino-1,3,5-triazine seien z.B. genannt: Melamin, N-substituierte Melamine, wie z.B. N-Methyl-, N-Äthyl-, N-Propyl- und N-Butylmelamin, Triazone, Ammelin, Guanamine, wie z.B. Benzoguanamin, Acetoguanamin, Diguanamine sowie Guanidine.

Als Aminoplast-Vorkondensate eignen sich sowohl vorwiegend monomolekulare Verbindungen als auch höher vorkondensierter Produkte.

Wertvolle Produkte liefern im allgemeinen sowohl vollständig als auch nur teilweise methylolierte Produkte, die gegebenenfalls auch verethert sein können.

Bevorzugt werden die Methylolverbindungen der genannten Harnstoffe und Amino-1,3,5-triazine. Unter diesen Verbindungen sind vor allem N-Methylolharnstoffe und N-Methylolmelamine besonders hervorzuheben. Auch Teilether derartiger Methylolverbindungen, wie z.B. mit Alkanolen von 1 bis 4 Kohlenstoffatomen, wie Methanol, Äthanol, n-Propanol oder n-Butanol können verwendet werden.

Als spezifische Aminoplast-Vorkondensate (b) seien erwähnt:
N,N'-Dimethylolharnstoff, Methylolharnstoff,
N,N'-Dimethylolharnstoff-dimethylether,
N,N'-Tetramethylolacetylendiharnstoff,
N,N'-Dimethylolethylenharnstoff,
N,N'-Dimethylolpropylenharnstoff,
4,5-Dihydroxy-N,N'-dimethylolethylenharnstoff,
N,N'-Dimethylol-5-hydroxypropylenharnstoff,
4-Methoxy-5,5-dimethyl-N,N'-dimethylolpropylenharnstoff,
N,N'-Dimethylol-5-oxapropylenharnstoff,
4,5-Dihydroxy-N,N'-dimethylolethylenharnstoff-dimethylether,
Dimethylolmelamin, Trimethylolmelamin, Tetramethylolmelamin,
Hexamethylolmelamin, Hexamethylolmelaminpentamethylether,
Pentamethylolmelamin-di- oder -tris-methylether,
N,N'-Dimethyloluron-dimethylether,
Hexamethylolmelaminhexamethylether oder -hexaethylether.

Darunter sind Monomethylolharnstoff, N,N'-Dimethylolharnstoff,
Tris- bis Hexamethylolmelamine besonders bevorzugt.

Es können auch Gemische dieser methylolierten Harnstoff-, und Melaminverbindungen verwendet werden.

Die Herstellung der neuen anionischen Adsorptionsmittel erfolgt durch Umsetzen einer

($a_1$) anionischen Verbindung der Formel (1) oder
($a_2$) einer Melaminverbindung, welche mindestens eine N-Methylolgruppe und mindestens eine N-Sulfo-$C_1$-$C_3$-alkylgruppe oder mindestens eine sulfatierte N-Methylolgruppe aufweist

mit einem

(b) gegebenenfalls veråtherten Additionsprodukt von Formaldehyd an eine Harnstoff-, Thioharnstoff- oder Amino-1,3,5-triazinverbindung oder dessen Bildungsgemisch.

Die Umsetzung erfolgt vorzugsweise in einem neutralen oder sauren Medium z.B. bei einem pH-Wert von 2 bis 7 und vorteilhafterweise bei einer Temperatur von 20 bis 200°C, vorzugsweise 50 bis 130°C.

Vorzugsweise wird ein Katalysator verwendet. Als Katalysatoren eignen sich z.B. organische oder anorganische Peroxyde oder Persalze.

Bevorzugte Katalysatoren sind jedoch anorganische und/oder organische Säuren oder deren Anhydride oder Salze, z.B. schweflige Säure, Schwefelsäure, Sulfaminsäure, Phosphorsäure, Salzsäure, Chloressigsäure, Oxalsäure, Maleinsäure, Weinsäure, Zitronensäure oder deren Anhydrid, ferner Ammoniumchlorid, Ammoniumnitrat, Ammoniumphosphat, Ammoniumrhodanid, Ammoniumacetat, Magnesiumchlorid, Zinknitrat oder Aluminiumsulfat. Besonders bevorzugt ist Sulfaminsäure.

Vorteilhafterweise ist das erfindungsgemässe Adsorptionsmittel aus

1 Mol der Komponente (a) und
0,2 bis 10 Mol, vorzugsweise 0,2 bis 3,5 Mol und insbesondere
0,5 bis 2 Mol der Komponente (b)
aufgebaut.

Die somit erhaltenen Umsetzungsprodukte enthalten in der Regel ein Säureequivalent von 0,2 bis 3, vorzugsweise 0,3 bis 2 mVal pro g anionisches Adsorptionsmittel.

Das erfindungsgemässe Adsorptionsmittel eignet sich vor allem zur Entfernung von kationischen Stoffen und Schwermetallionen aus wässerigen Lösungen, insbesondere aus Abwässern, wobei die Leistungsfähigkeit des neuen Adsorptionsmittels bedeutend höher ist als diejenige, die mit den herkömmlichen Adsorptionsmitteln bzw. Ionenaustauschern erreicht wird. Insbesondere zeichnen sich die neuen Adsorptionsmittel gegenüber den bekannten Mitteln wie z.B. Aktivkohle, durch hohe Aufnahmefähigkeit für in Wasser gelöste oder dispergierte, besonders kationische Stoffe und in Wasser vorhandene Schwermetallionen aus.

Gegenstand vorliegender Erfindung ist demnach auch ein Verfahren zur Entfernung von kationischen Stoffen und Schwermetallionen aus wässerigen Lösungen, welches dadurch gekennzeichnet ist, dass man die wässerigen Lösungen mit den erfindungsgemässen anionischen Adsorptionsmitteln in Kontakt bringt.

Dieses Verfahren eignet sich vor allem zur Reinigung von wässerigen Flotten, welche organische kationische Stoffe bzw. deren Gemische enthalten. Insbesondere lassen sich kationische Farbstoffe, Aufheller, Färberei- oder Textilhilfsmittel, Tenside und Mischungen davon in befriedigendem Ausmass den Abwässern entziehen. Erfindungsgemäss können Abwässer, welche Mischungen von kationischen Farbstoffen mit kationischen Hilfsmitteln enthalten, erfolgreich gereinigt werden.

Dank der grossen Anwendungsbreite des neuen Adsorptionsmittels ist es möglich, eine heute immer dringender geforderte Einsparung von Frischwasser durch teilweise bis vollständige Rezirkulatión von anfallenden Rest- oder Abfallflotten zu erreichen. Dabei handelt es sich unabhängig von den apparativen Einrichtungen vor allem um die im Zusammenhang mit Färbe-, Bleich- und Waschprozessen anfallenden Abwässer der Farbstoff-, Faser-, Textil-, Zellstoff-, Papier- und Lederindustrie. Diese können z.B. im Falle einer Färberei aus den üblichen Färbeapparaturen, wie sie für die Färbung von losem Fasermaterial, von Kammzug, von Garn und Geweben bzw. Gewirken verwendet werden, wie auch aus Reinigungsvorrichtungen z.B. aus einer Breitwaschmaschine, entstammen.

Das erfindungsgemässe Adsorptionsmittel kann auch zur Entfernung oder Abfangen von Schwermetallionen eingesetzt werden, wobei auch in diesem Falle die Leistungsfähigkeit des neuen Adsorptionsmittels bedeutend höher ist als diejenige, die mit den herkömmlichen Adsorptionsmitteln bzw. Ionenaustauschern erreicht wird.

Die Reinigung der Abwässer einschliesslich der Entfernung der Schwermetallionen wird zweckmässig bei 2 bis 150°C vorgenommen. Vorzugsweise erfolgt sie jedoch bei 10 bis 100°C, insbesondere bei 20 bis 70°C. Falls es erwünscht ist, kann die Reinigung der Abwässer auch unter Druck oder Vakuum erfolgen. Der pH-Wert der Abwässer kann in weiten Grenzen variieren, z.B. von 2 bis 10. pH-Korrekturen, z.B. auf einen Wert von 3 bis 8 können jedoch, je nach der Natur des verwendeten Adsorptionsmittels das Reinigungsverfahren erleichtern und beschleunigen.

Die Behandlung der Abwässer kann diskontinuierlich, semikontinuierlich oder kontinuierlich durchgeführt werden. Prinzipiell sind im Sinne der Erfindung folgende Ausführungsformen geeignet:

(a) sogenanntes Rühr-Verfahren, wobei das zu reinigende Wasser in einem Gefäss oder einer Reihe von Gefässen mit dem Adsorptionsmittel verrührt und dann abgetrennt wird;
(b) sogenanntes Fliessbett-Verfahren, in dem das Adsorptionsmittel durch die Strömung der zu reinigenden Flotte im Schwebezustand gehalten wird;
(c) sogenanntes Festbett-Verfahren, wobei die zu reinigende Flotte durch ein filterartig angeordnetes Adsorptionsmittel geführt wird.

Wird von diesen drei Verfahrensvarianten das Festbett-Verfahren (c) angewendet, so eignen sich vor allem folgende drei apparative Varianten:

1. Der Behandlungsapparat wird mit der Adsorber-Einrichtung fest verbunden.

2. Die Adsorber-Einrichtung ist beweglich und kann nach Bedarf mit jeder Behandlungsapparatur gekoppelt werden.

3. Die aus den Behandlungsflotten entstammenden Abwässer werden in einem geeigneten Behälter vereinigt und hierauf gemeinsam durch das Adsorptionsmittel geführt.

Falls erwünscht, kann das erfindungsgemäss zu verwendende anionische Adsorptionsmittel mit anderen Ionenaustauschern oder Adsorbentien wie z.B. Aktivkohle und/oder anderen bekannten Filtrationshilfsmitteln, wie z.B. Torf, Kieselgur oder Diatomeenerde vermischt werden. In diesem Falle wird z.B. die Aktivkohle zu dem neuen Adsorptionsmittel in Mengen von 2 bis 95 Gew.-%, vorzugsweise 10 bis 70 Gew.-%, berechnet auf das Gewicht des anionischen Adsorptionsmittels zugesetzt.

Als Farbstoffe, die erfindungsgemäss aus den Abwässern entfernt werden, können sowohl wasserlösliche als auch in Wasser dispergierte, kationische Farbstoffe oder optische Aufheller in Betracht kommen. Bevorzugt eignet sich das erfindungsgemässe Verfahren zur Entfernung von wasserlöslichen kationischen Farbstoffen oder optischen Aufhellern. Bei den kationischen Farbstoffen handelt es sich ganz allgemein um deren gebräuchliche Salze und Metallhalogenid- beispielsweise Zinkchloriddoppelsalze der bekannten kationischen Farbstoffe, deren kationischer Charakter von einer Carbonium-, Oxonium-, Sulfonium- und vor allem von einer Ammoniumgruppe herrührt. Beispiele für solche chromophore Systeme sind: Methin-, Azomethin-, Azo-, Hydrazon-, Azin-, Oxazin-, Thiazin-, Diazin-, Xanthen-, Acridin-, Polyarylmethan- wie Diphenylmethan- oder Triphenylmethan- sowie auch Cumarin- und Azofarbstoffe, die einen Indolinium-, Pyrazolium-, Triazolium-, Tetrazolium-, Oxadiazolium-, Thiodiazolium-, Oxazolium-, Thiazolium, Pyridinium-, Pyrimidinium- oder Pyraziniumring aufweisen. Ferner können es Arylazo-, Phthalocyanin- und Anthrachinonfarbstoffe sein, die eine externe Ammoniumgruppe, beispielsweise eine externe Cyclammonium- oder Alkylammoniumgruppe tragen.

Das neue Adsorptionsmittel eignet sich nicht nur zur Entfärbung von in der Farbstoffabrikation, Textil-, Papier- bzw. Leder-Färberei anfallenden Restflotten, sondern leistet überdies auch gute Dienste, wenn es darum geht, Reste von kationischen optischen Aufhellern aus Wasch- und Bleichflotten zu entfernen.

Die kationischen Aufheller können beliebigen Aufhellerklassen angehören. Es handelt sich vor allem um kationische Aufheller der Methin-, Azamethin-, Benzofuran-, Benzimidazolyl-, Cumarin-, Naphthalimid- oder Pyrazolinreihe.

Ein weiterer Vorteil des neuen anionischen Adsorptionsmittels beruht darauf, dass es mindestens teilweise nebst den Farbstoffen auch eine Eliminierung von kationischen Tensiden, Textil- und Färbereihilfsmitteln aus wässerigen Restflotten gestattet. Solche Hilfsmittel sind im Buch «Tenside-Textilhilfsmittel-Waschrohstoffe» von Dr. Kurt Lindner (herausgegeben von Wissenschaftlicher Verlagsgesellschaft, Stuttgart, 1964) näher beschrieben.

Zu den mit den neuen Adsorptionsmitteln zu behandelnden Abwässern gehören auch unterschiedliche Industrieabwässer, die Ionen von Metallen mit einem Normalpotential von in der Regel grösser als −1,5 V, vorzugsweise zwischen −1,0 bis +0,85 V, bei 25°C enthalten. Solche Metallionen sind beispielsweise $Cd^{++}$, $Cu^{++}$, $Zn^{++}$, $UO_2^{++}$, $Ni^{++}$, $Sn^{++}$, $Pb^{++}$, $Hg^{++}$, $Ag^{+}$, $Fe^{+++}$, $Cr^{+++}$ und $Co^{+++}$.

Die Entfernung der Metallionen wird zweckmässig bei 10 bis 100°C vorgenommen.

Das anionische Adsorptionsmittel dient auch als allgemeiner Kationenaustauscher.

Durch geeignete Wahl des Adsorptionsmittels können erfindungsgemäss den Abwässern bis zu 100% der gelösten Verunreinigung entzogen werden. Es können dabei Rückhaltewirkungen bis zu 50 g Laststoff, d.h. Farbstoff, optische Aufheller, Hilfsmittel, Waschmittel, Gerbstoff pro 10 g Adsorptionsmittel erreicht werden. Vorzugsweise werden Restflotten entfärbt, deren Farbstoffkonzentration 0,01 bis 5,0 g/l vor allem 0,01 bis 1,0 g/l beträgt. Durch das erfindungsgemässe Adsorptionsmittel kann auch der Metallgehalt im Abwasser auf praktisch vernachlässigbare Mengen von 2,5 ppm, in manchen Fällen sogar kleiner als 0,1 ppm, reduziert werden, so dass das damit behandelte Abwasser als frei von Schwermetallen abgegeben werden kann. In Fällen, in denen es nicht gelingt, eine vollständige Entfärbung bzw. Entfernung der Metallionen durch eine einmalige Behandlung der Abwässer mit dem neuen Adsorptionsmittel zu erreichen, empfiehlt es sich, den Reinigungsvorgang zu wiederholen.

Nach der Adsorption der Verunreinigungen lassen sich die beladenen Adsorptionsmittel leicht von dem gereinigten Abwasser abtrennen. Sie weisen einen hohen Feststoffgehalt auf und können deshalb ohne Trocknungsvorgang direkt verbrannt werden. Die neuen Adsorptionsmittel können mit Vorteil anstelle von Flockungsmitteln in der Abwasserreinigung eingesetzt werden, wobei keine Überdosierprobleme auftreten. Aufgrund der guten Entwässerungseingenschaften werden zudem Schlammprobleme vermieden. Des weitern zeichnen sich die anionischen Adsorptionsmittel durch eine Retention für kationische Stoffe in neutralem pH-Bereich aus. Gewünschtenfalls können sie auch mit Hilfe z.B. einer verdünnten, wässerigen Mineralsäurelösung regeneriert werden.

In den folgenden Beispielen sind Prozente immer Gewichtsprozente.

Beispiel 1

85,2 g einer 53%igen wässerigen Lösung einer Verbindung der Formel

(11) $NaSO_3-CH_2CH_2-CON(CH_2OH)_2$

werden mit 2N-Salzsäure auf pH 4,5 gestellt und

mit 24,0 g N,N'-Dimethylolharnstoff versetzt. Die Mischung wird dann auf 60°C aufgeheizt und rasch mit 10 ml 15%iger Sulfaminsäure versetzt, worauf die Mischung nach 2 bis 3 Minuten geliert. Die gelierte Reaktionsmasse wird auf 98°C erhitzt, wobei sie langsam schmilzt und nach 45 Minuten klar wird. Die klare Reaktionsmasse wird auf Trockenbleche ausgegossen und im Vakuumtrockenschrank während 16 Stunden bei 115°C kondensiert. Hierauf wird das Kondensat in wenig Wasser aufgeschlämmt und mit einer 10%igen Natriumcarbonatlösung gewaschen, bis die Waschlösung einen pH von 7 zeigt. Das gereinigte Kondensat wird über Nacht bei 80°C getrocknet und anschliessend in einer Kugelmühle zu einem Pulver gemahlen. Man erhält 74 g eines weissen Pulvers, was einer Ausbeute von 77% der Theorie entspricht.

Beispiel 2

42,6 g einer 53%igen wässerigen Lösung einer Verbindung der Formel

(12) $NaSO_3-CH_2CH_2-CONH-CH_2OH$

werden mit 41,8 g N,N'-Dimethylolurondimethylether vermischt. Die Mischung wird auf 60°C erwärmt und mit 10 ml 15%iger Sulfaminsäure versetzt, worauf die Mischung nach 2 bis 3 Minuten geliert. Die gelierte Reaktionsmasse wird auf 98°C aufgeheizt und während 16 Stunden kondensiert. Das Kondensat wird dann mit Wasser und Natriumcarbonatlösung gewaschen. Anschliessend wird das Kondensat getrocknet und gemahlen. Man erhält somit 15 g eines weissen Pulvers. Ausbeute 35%° der Theorie.

Beispiel 3

42,6 g einer 53%igen wässrigen Lösung einer Verbindung der Formel (12) werden mit 45 g Hexamethylolmelamin vermischt. Die Mischung wird auf 60°C erwärmt und 10 ml 15%iger Sulfaminsäure versetzt, worauf die Mischung im Verlauf von 3 Minuten geliert. Die Reaktionsmasse wird auf 98°C aufgeheizt und während 16 Stunden kondensiert. Das Kondensat wird mit Wasser und Natriumcarbonatlösung gewaschen und anschliessend getrocknet und gemahlen. Man erhält 30 g eines weissen Pulvers. Ausbeute 60% der Theorie.

Beispiel 4

43,5 g einer 53%igen wässerigen Lösung einer Verbindung der Formel (11) werden mit 20 g Monomethylolharnstoff vermischt. Die Mischung wird auf 60°C erwärmt und mit 5 ml 15%iger Sulfaminsäure versetzt, wobei sie geliert. Die Reaktionsmasse wird auf 98°C erhitzt und während 16 Stunden im Trockenschrank bei 110°C kondensiert. Das Kondensat wird mit Wasser und Natriumcarbonatlösung gewaschen und schliesslich getrocknet und gemahlen. Man erhält 38 g eines weissen Pulvers. Ausbeute 90% der Theorie.

Beispiel 5

40 g einer Verbindung der Formel

$$\begin{array}{ll} & \quad ONa \\ & \quad | \\ (13) & CH_3O-P-CH_2CH_2-CO-NH-CH_2OH \\ & \quad \| \\ & \quad O \end{array}$$

werden in Form einer wässerigen Lösung mit 24 g N,N'-Dimethylolharnstoff vermischt. Die Mischung wird auf 60°C erwärmt und mit 4 ml 15%iger Sulfaminsäure versetzt, worauf die Mischung langsam geliert. Die Gelmasse wird im Trockenschrank während 16 Stunden bei 100°C kondensiert. Das erhaltene Kondensat wird mit Natriumcarbonatlösung behandelt und schliesslich getrocknet und gemahlen. Man erhält 24,5 g eines weissen Pulvers. Ausbeute 60% der Theorie.

Beispiel 6

40 g einer Verbindung der Formel (13) werden in Form einer wässerigen Lösung mit 45 g Hexamethylolmelamin vermischt. Die Mischung wird auf 60°C erhitzt und mit 5 ml 15%iger Sulfaminsäure versetzt, wobei die Reaktionsmischung hart wird. Die Reaktionsmasse wird auf 98°C erhitzt, wobei sie wieder flüssig wird. Nach dem Austragen auf Trockenbleche wird die Reaktionsmischung während 16 Stunden getrocknet und kondensiert. Man erhält nach Waschen des Kondensates mit Wasser und Natriumcarbonatlösung, Trocknen und Mahlen 34 g eines weissen Pulvers. Ausbeute 50% der Theorie.

Beispiel 7

65,3 g einer 35%igen wässerigen Lösung einer Verbindung der Formel (11) wird mit Salzsäure auf pH 4,5 eingestellt und mit 30,6 g Hexamethylolmelamin vermischt. Die Mischung wird auf 70°C erwärmt und mit 15%iger Sulfaminsäure auf pH 3,0 eingestellt, worauf die Masse nach 2 bis 3 Minuten geliert. Die gelierte Masse wird auf 110°C aufgeheizt und 16 Stunden kondensiert. Das Kondensat wird gemahlen, mit Natriumcarbonatlösung gewaschen und getrocknet. Man erhält 30 g eines weissen Pulvers. Ausbeute 57% der Theorie.

Beispiel 8

65,3 g einer 35%igen wässerigen Lösung einer Verbindung der Formel (11) wird mit Salzsäure auf pH 4,5 eingestellt und mit 19,5 g Hexamethylolmelaminhexamethylether und 14,6 g N,N'-Dimethylolethylenharnstoff vermischt. Die Mischung wird auf 70°C erwärmt und mit 15%iger Sulfaminsäure auf pH 3,0 eingestellt, worauf die Reaktionsmasse nach 2 bis 3 Minuten geliert. Die gelierte Masse wird auf 110°C aufgeheizt und 16 Stunden kondensiert. Das Kondensat wird gemahlen, mit Natriumcarbonatlösung gewaschen und getrocknet. Man erhält 20 g eines weissen Pulvers. Ausbeute 35% der Theorie.

Beispiel 9

100 g einer 25%igen wässerigen Lösung einer Verbindung, die im wesentlichen der Formel

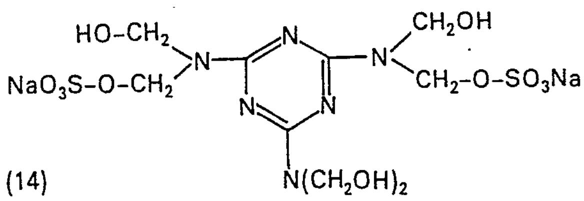

(14)

entspricht,
wird mit Salzsäure auf pH 4,5 eingestellt und darauf mit 39 g Hexamethylolmelaminhexamethylether vermischt. Die Mischung wird auf 70°C erwärmt und mit 15%iger Sulfaminsäure auf pH 3,0 eingestellt, worauf die Mischung nach 2 bis 3 Minuten geliert. Die gelierte Masse wird auf 110°C aufgeheizt und während 16 Stunden kondensiert. Das Kondensat wird dann gemahlen, mit Natriumcarbonatlösung gewaschen und getrocknet. Man erhält 50 g eines weissen Pulvers, Ausbeute 76% der Theorie.

Beispiel 10

100 g einer 25%igen wässerigen Lösung einer Verbindung der Formel (14) wird mit Salzsäure auf pH 4,5 eingestellt und mit 24 g N,N'-Dimethylolharnstoff vermischt. Die Mischung wird auf 70°C erwärmt und mit 15%iger Sulfaminsäure auf pH 3,0 eingestellt, worauf die Mischung nach 2 bis 3 Minuten geliert. Die gelierte Masse wird auf 110°C aufgeheizt und kondensiert. Das Kondensat wird gemahlen, mit Natriumcarbonatlösung gewaschen und getrocknet. Man erhält 24 g eines weissen Pulvers. Ausbeute 50% der Theorie.

Beispiel 11

118 g einer 23%igen wässerigen Lösung einer Verbindung, die im wesentlichen der Formel

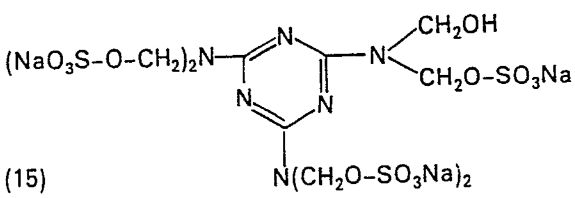

(15)

entspricht,
wird mit Salzsäure auf pH 4,5 eingestellt und mit 30,6 g Hexamethylolmelamin vermischt. Die Mischung wird auf 70°C erwärmt und mit 15%iger Sulfaminsäure auf pH 3,0 eingestellt, worauf die Mischung nach 2 bis 3 Minuten geliert. Die gelierte Masse wird auf 110°C aufgeheizt und kondensiert. Das Kondensat wird gemahlen, mit Natriumcarbonatlösung gewaschen und getrocknet. Man erhält 41 g eines weissen Pulvers. Ausbeute 72% der Theorie.

Beispiel 12

22 g eines durch Umsetzung von Taurinnatriumsalz und Ethylurethan erhaltenen Reaktionsproduktes der Formel (5) werden in 42 ml Wasser gerührt und mit 15 g einer 35%igen Formaldehydlösung versetzt. Nach 24 Stunden Rühren der Mischung bei einem pH-Wert von 10,2 erhält man 79 g einer wässerigen Lösung einer Methylolamidverbindung der Formel

(16) $NaO_3S-CH_2CH_2-NH-CO-NH-CH_2OH$.

Diese Lösung wird mit konz. Salzsäure (37%) auf pH 4,5 eingestellt und mit 30,6 g Hexamethylolmelamin und 24 g N,N'-Dimethylolharnstoff versetzt. Diese Mischung wird auf 70°C erwärmt und mit 15%iger Sulfaminsäurelösung auf pH 3,0 eingestellt, worauf die Mischung nach 2 bis 3 Minuten geliert. Das Kondensat wird auf 110°C aufgeheizt und im Vakuumtrockenschrank kondensiert. Das Kondensat wird mit Natriumcarbonatlösung gewaschen und getrocknet. Man erhält 50 g eines weissen Pulvers. Ausbeute 70% der Theorie.

Beispiel 13

In einem Rührgefäss werden 500 ml einer rot gefärbten, auf einen pH-Wert von 4,5 gestellten Restflotte, welche noch 500 mg/l des kationischen Farbstoffes der Formel

(100)

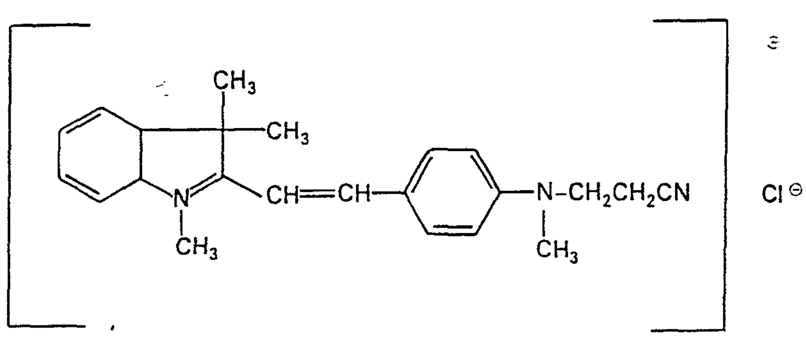

in gelöster Form enthält, vorgelegt. Die Restflotte wird auf eine Temperatur von 50°C erwärmt und mit 0,5 g des gemäss Beispiel 1 hergestellten Adsorptionsmittels in Pulverform versetzt. Nach einer Adsorptionsdauer von 60 Minuten wird die Anschlämmung über einen Glasfaserfilter filtriert. Die Entfärbung des Filtrates beträgt 68,5%. Der Trockengehalt des feuchten Filtergutes beträgt 70%.

Bei Verwendung der gemäss den Beispielen 2, 3, 4, 7, 8, 9, 10 und 11 hergestellten Adsorptionsmittel anstelle desjenigen des Beispiels 1 erzielt man entsprechende Entfärbungen von 41%, 40%, 57%, 56%, 54%, 64%, 86% und 43%.

Beispiel 14

In einem Rührreaktor werden 1 Liter einer Zinkchloridlösung, welche auf einen pH-Wert von 5 eingestellt ist und 50 mg $Zn^{++}$ in gelöster Form enthält, vorgelegt. Die Flotte wird mit 5 g des gemäss Beispiel 1 hergestellten Adsorptionsmittels versetzt. Nach einer Adsorptionsdauer von 5 Minuten wird eine Probe entnommen, welche filtriert wird und eine Zinkionenkonzentration von weniger als 1 mg/l enthält.

Beispiel 15

In einem Rührreaktor werden 1 Liter einer Kupferlösung, welche auf einen pH-Wert von 5 eingestellt ist und 50 mg Kupferionen in gelöster Form enthält, vorgelegt. Die Flotte wird mit 5 g des gemäss Beispiel 1 hergestellten Adsorptionsmittels versetzt. Nach einer Adsorptionsdauer von 5 Minuten wird eine Probe entnommen, welche filtriert wird und eine Kupferkonzentration von weniger als 1 mg/l enthält.

Beispiel 16

In einem Rührreaktor werden 1 Liter einer Silberlösung, welche auf einen pH-Wert von 5 eingestellt ist und 50 ml Silberionen in gelöster Form enthält, vorgelegt. Die Flotte wird mit 0,5 g des gemäss Beispiel 1 hergestellten Adsorptionsmittels versetzt. Nach einer Adsorptionsdauer von 5 Minuten wird eine Probe entnommen, welche filtriert wird und eine Silberkonzentration von 3,8 mg/l enthält.

**Patentansprüche für die Vertragsstaaten: BE, CH, DE, FR, GB, IT, LI, NL, SE**

1. Anionisches Adsorptionsmittel, dadurch gekennzeichnet, dass es durch Umsetzung einer

($a_1$) anionischen Verbindung der Formel

(1) Z-Q-CO-N-X,
           |
           Y

worin

X Wasserstoff oder $-CH_2OH$,

Y Wasserstoff, Niederalkyl oder $-CH_2OH$,

Q Alkylen mit 1 bis 8 Kohlenstoffatomen und

Z den Säurerest einer mehrbasischen, anorganischen, Sauerstoff enthaltenden Säure, oder

-CO-Q-Z den Säurerest einer diesen anorganischen Säurerest aufweisenden Dicarbonsäure, wobei die Endcarboxylgruppe der Dicarbonsäure gegebenenfalls durch die Gruppe der Formel

(1a) X-N-CO-
       |
       Y

ersetzt ist, bedeuten, oder

($a_2$) einer Melaminverbindung, welche mindestens eine N-Methylolgruppe und mindestens eine N-Sulfo-$C_1$-$C_3$-alkylgruppe oder mindestens eine sulfatierte N-Methylolgruppe aufweist

mit einem

(b) gegebenenfalls verätherten Additionsprodukt von Formaldehyd an eine Harnstoff-, Thioharnstoff- oder Amino-1,3,5-Triazinverbindung

hergestellt worden ist.

2. Adsorptionsmittel gemäss Anspruch 1, dadurch gekennzeichnet, dass die Komponente ($a_1$) eine Verbindung der Formel (1) ist, worin Z die Sulfonsäure- oder Phosphorsäuregruppe ist.

3. Adsorptionsmittel gemäss einem der Ansprüche 1 und 2, dadurch gekennzeichnet, dass die Komponente ($a_1$) eine Verbindung der Formel (1) ist, worin Y $C_1$-$C_3$-Alkylen oder vorzugsweise $C_2$-$C_3$-Alkylen bedeutet.

4. Adsorptionsmittel gemäss Anspruch 1, dadurch gekennzeichnet, dass die Komponente ($a_1$) eine Verbindung der Formel

(2) $Z_1$-$Q_1$-CO-N-$CH_2$-OH
                |
                Y

ist, worin

$Q_1$ $C_1$-$C_3$-Alkylen oder $C_1$-$C_3$-Alkylen, das durch -COOH oder die Gruppe der Formel

(2a) -CO-N-$CH_2$OH
        |
        Y

substituiert ist und

$Z_1$ $-SO_3M$ oder -P(=O)(OR)-OM

R Niederalkyl oder M,

M Wasserstoff, Alkalimetall oder Ammonium bedeuten und

Y die im Anspruch 1 angegebene Bedeutung hat.

5. Adsorptionsmittel gemäss Anspruch 4, dadurch gekennzeichnet, dass die Komponente ($a_1$) eine Verbindung der Formel (2) ist, worin

$Q_1$ $C_2$-$C_3$-Alkylen,

$Z_1$-$SO_3M$ und Y Wasserstoff oder $-CH_2OH$ bedeuten.

6. Adsorptionsmittel gemäss Anspruch 1, dadurch gekennzeichnet, dass die Komponente ($a_2$) eine Methylolmelaminverbindung der Formel

(3) 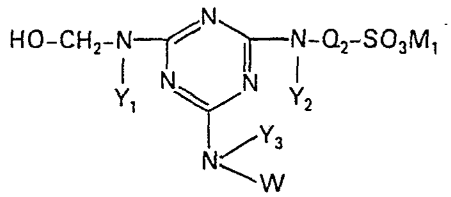

ist, worin W Wasserstoff, $-CH_2Oh$ oder $-Q_2-SO_3M_1$,
$Y_1$ Wasserstoff, Niederalkyl, $-CH_2OH$ oder $-Q_2-SO_3M_1$,
$Y_2$ und $Y_3$ unabhängig voneinander Wasserstoff, Niederalkyl oder $-CH_2OH$,
$Y_2C_2-C_3$-Alkylen und
$M_1$ Wasserstoff, Natrium, Kalium oder Ammonium
bedeuten.

7. Adsorptionsmittel gemäss Anspruch 1, dadurch gekennzeichnet, dass die Komponente ($a_2$) ein Hexamethylolmelamin ist, das eine bis fünf sulfatierte Methylolgruppen aufweist.

8. Adsorptionsmittel gemäss einem der Ansprüche 1 bis 7, dadurch gekennzeichnet, dass als Komponente (b) methylolierte Harnstoffe oder Amino-1,3,5-triazine, die gegebenenfalls veräthert sind, verwendet werden.

9. Adsorptionsmittel gemäss Anspruch 8, dadurch gekennzeichnet, dass als Komponente (b) N-Methylol-harnstoffe oder N-Methylol-melamine und vorzugsweise Monomethylolharnstoff, Dimethylolharnstoff oder Tris- bis Hexamethylolmelamin verwendet werden.

10. Adsorptionsmittel gemäss einem der Ansprüche 1 bis 9, dadurch gekennzeichnet, dass die Komponenten ($a_1$) oder ($a_2$) mit (b) zusammen mindestens zwei, gegebenenfalls verätherte N-Methylolamidgruppen aufweisen.

11. Verfahren zur Herstellung eines anionischen Adsorptionsmittels, dadurch gekennzeichnet, dass man
($a_1$) eine anionische Verbindung der Formel

(1) Z-Q-CO-N-X,
|
Y

worin
X Wasserstoff oder $-CH_2OH$,
Y Wasserstoff, Niederalkyl oder $-CH_2OH$,
Q Alkylen mit 1 bis 8 Kohlenstoffatomen und
Z den Säurerest einer mehrbasischen, anorganischen, Sauerstoff enthaltenden Säure, oder
-CO-Q-Z den Säurerest einer diesen anorganischen Säurerest aufweisenden Dicarbonsäure, wobei die Endcarboxylgruppe der Dicarbonsäure gegebenenfalls durch die Gruppe der Formel

(1a) X-N-CO-
|
Y

ersetzt ist, bedeuten, oder
($a_2$) eine Melaminverbindung, welche mindestens eine N-Methylolgruppe und mindestens eine N-Sulfo-$C_1-C_3$-alkylgruppe oder mindestens eine sulfatierte N-Methylolgruppe aufweist
mit einem
(b) gegebenenfalls verätherten Additionsprodukt von Formaldehyd an eine Harnstoff-, Thioharnstoff- oder Amino-1,3,5-Triazinverbindung oder dessen Bildungsgemisch, umsetzt.

12. Verfahren gemäss Anspruch 11, dadurch gekennzeichnet, dass die Umsetzung in Gegenwart eines Katalysators, vorzugsweise Sulfaminsäure durchgeführt wird.

13. Verwendung der anionischen Adsorptionsmittel, wie sie in den Ansprüchen 1 bis 10 definiert sind, zur Entfernung von kationischen Stoffen aus wässerigen Lösungen.

**Patentansprüche für den Vertragsstaat: AT**

1. Verfahren zur Herstellung eines anionischen Adsorptionsmittels, dadurch gekennzeichnet, dass man
($a_1$) eine anionische Verbindung der Formel

(1) Z-Q-CO-N-X,
|
Y

worin
X Wasserstoff oder $-CH_2OH$,
Y Wasserstoff, Niederalkyl oder $-CH_2OH$,
Q Alkylen mit 1 bis 8 Kohlenstoffatomen und
Z den Säurerest einer mehrbasischen, anorganischen, Sauerstoff enthaltenden Säure, oder
-CO-Q-Z den Säurerest einer diesen anorganischen Säurerest aufweisenden Dicarbonsäure, wobei die Endcarboxylgruppe der Dicarbonsäure gegebenenfalls durch die Gruppe der Formel

(1a) X-N-CO-
|
Y

ersetzt ist, bedeuten, oder
($a_2$) eine Melaminverbindung, welche mindestens eine N-Methylolgruppe und mindestens eine N-Sulfo-$C_1-C_3$-alkylgruppe oder mindestens eine sulfatierte N-Methylolgruppe aufweist
mit einem
(b) gegebenenfalls verätherten Additionsprodukt von Formaldehyd an eine Harnstoff-, Thioharnstoff- oder Amino-1,3,5-Triazinverbindung oder dessen Bildungsgemisch umsetzt.

2. Verfahren gemäss Anspruch 1, dadurch gekennzeichnet, dass die Umsetzung in Gegenwart eines Katalysators, vorzugsweise Sulfaminsäure durchgeführt wird.

3. Verfahren gemäss einem der Ansrpüche 1 und 2, dadurch gekennzeichnet, dass die Komponente ($a_1$) eine Verbindung der Formel (1) ist, worin Z die Sulfonsäure- oder Phosphorsäuregruppe ist.

4. Verfahren gemäss einem der Ansprüche 1 bis 3, dadurch gekennzeichnet, dass die Komponente ($a_1$) eine Verbindung der Formel (1) ist, worin Q $C_1$–$C_3$-Alkylen oder vorzugsweise $C_2$–$C_3$-Alkylen bedeutet.

5. Verfahren gemäss einem der Ansprüche 1 und 2, dadurch gekennzeichnet, dass die Komponente ($a_1$) eine Verbindung der Formel

(2) $Z_1-Q_1-CO-N-CH_2-OH$
|
Y

ist, worin

$Q_1$ $C_1$–$C_3$-Alkylen oder $C_1$–$C_3$-Alkylen, das durch -COOH oder die Gruppe der Formel

(2a) $-CO-N-CH_2OH$
|
Y

substituiert ist und

$Z_1$ $-SO_3M$ oder 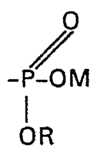

R Niederalkyl oder M,
M Wasserstoff, Alkalimetall oder Ammonium
bedeuten und
Y die im Anspruch 1 angegebene Bedeutung hat.

6. Verfahren gemäss Anspruch 5, dadurch gekennzeichnet, dass die Komponente ($a_1$) eine Verbindung der Formel (2) ist, worin
$Q_1$ $C_2$–$C_3$-Alkylen,
$Z_1$ $-SO_3M$ und Y Wasserstoff oder $-CH_2OH$ bedeuten.

7. Verfahren gemäss einem der Ansprüche 1 und 2, dadurch gekennzeichnet, dass die Komponente ($a_2$) eine Methylolmelaminverbindung der Formel

(3) 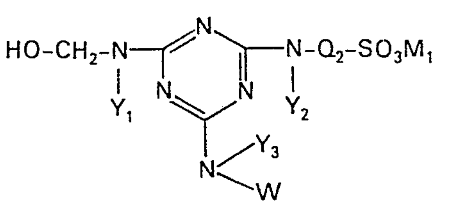

ist, worin W Wasserstoff, $-CH_2OH$ oder $-Q_2-SO_3M_1$,
$Y_1$ Wasserstoff, Niederalkyl, $-CH_2OH$ oder $-Q_2-SO_3M_1$,
$Y_2$ und $Y_3$ unabhängig voneinander Wasserstoff, Niederalkyl oder $-CH_2OH$,
$Y_2$ $C_2$–$C_3$-Alkylen und
$M_1$ Wasserstoff, Natrium, Kalium oder Ammonium
bedeuten.

8. Verfahren gemäss einem der Ansprüche 1 und 2, dadurch gekennzeichnet, dass die Komponente ($a_2$) ein Hexamethylolmelamin ist, das eine bis fünf sulfatierte Methylolgruppen aufweist.

9. Verfahren gemäss einem der Ansprüche 1 bis 8, dadurch gekennzeichnet, dass als Komponente (b) methylolierte Harnstoffe oder Amino-1,3,5-triazine, die gegebenenfalls veräthert sind, verwendet werden.

10. Verfahren gemäss Anspruch 9, dadurch gekennzeichnet, dass als Komponente (b) N-Methylol-harnstoffe oder N-Methylolmelamine und vorzugsweise Monomethylolharnstoff, Dimethylolharnstoff oder Tris- bis Hexamethylolmelamin verwendet werden.

11. Verfahren gemäss einem der Ansprüche 1 bis 10, dadurch gekennzeichnet, dass die Komponenten ($a_1$) oder ($a_2$) mit Komponente (b) zusammen mindestens zwei, gegebenenfalls verätherte, N-Methylolamidgruppen aufweisen.

**Claims for the Contracting States: BE, CH, DE, FR, GB, IT, LI, NL, SE**

1. Anionic adsorbent, characterised in that it has been produced by reaction

($a_1$) of an anionic compound of the formula

(1) $Z-Q-CO-N-X,$
|
Y

wherein
X is hydrogen or $-CH_2OH$,
Y is hydrogen, lower alkyl or $-CH_2OH$,
Q is alkylene having 1 to 8 carbon atoms, and
Z is the acid radical of a polybasic, inorganic acid containing oxygen, or
-CO-Q-Z is the acid radical of a dicarboxylic acid containing this inorganic acid radical, in which the terminal carboxyl group of the dicarboxylic acid is optionally replaced by the group of the formula

(1a), $X-N-CO-$ or
|
Y

($a_2$) of a melamine compound containing at least one N-methylol group and at least one N-sulfo-$C_1$–$C_3$-alkyl group or at least one sulfated N-methylol group,

with

(b) a free or etherified addition product of formaldehyde with a urea, thiourea or amino-1,3,5-triazine compound.

2. Adsorbent according to claim 1, characterised in that the component ($a_1$) is a compound of the formula (1) wherein Z ist the sulfonic acid group or phosphoric acid group.

3. Adsorbent according to either of the claims 1 and 2, characterised in that the component ($a_1$) is a compound of the formula (1) wherein Q is $C_1$–$C_3$-alkylene or preferably $C_2$–$C_3$-alkylene.

4. Adsorbent according to claim 1, characterised in that the component ($a_1$) is a compound of the formula

(2) $Z_1-Q_1-CO-N-CH_2-OH$
|
Y

wherein
$Q_1$ is $C_1$-$C_3$-alkylene or $C_1$-$C_3$-alkylene which is substituted by -COOH or the group of the formula (2a)

(2a) $-CO-N-CH_2OH$ and
|
Y

$Z_1$ $-SO_3M$ or 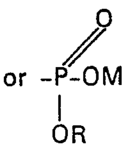

R is lower alkyl or M,
M is hydrogen, an alkali metal or ammonium, and
Y has the meaning given in claim 1.

5. Adsorbent according to claim 4, characterised in that the component ($a_1$) is a compound of the formula (2) wherein
$Q_1$ is $C_2$-$C_3$-alkylene,
$Z_1$ is $-SO_3M$, and
Y is hydrogen or $-CH_2OH$.

6. Adsorbent according to claim 1, characterised in that the component ($a_2$) is a methylolmelamine compound of the formula

(3) 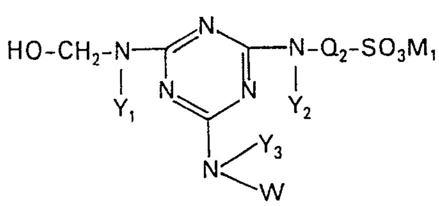

wherein
W is hydrogen, $-CH_2OH$ or $-Q_2-SO_3M_1$,
$Y_1$ is hydrogen, lower alkyl, $-CH_2OH$ or $-Q_2-SO_3M_1$,
$Y_2$ and $Y_3$ independently of one another are hydrogen, lower alkyl or $-CH_2OH$,
$Q_2$ is $C_2$-$C_3$-alkylene, and
$M_1$ is hydrogen, sodium, potassium or ammonium.

7. Adsorbent according to claim 1, characterised in that the component ($a_2$) is a hexamethylolmelamine which contains one to five sulfated methylol groups.

8. Adsorbent according to any one of claims 1 to 7, characterised in that methylolated ureas or amino-1,3,5-triazines, which are unetherified or etherified, are used as component (b).

9. Adsorbent according to claim 8, characterised in that N-methylolureas or N-methylolmelamines, and preferably monomethylolurea, dimethylolurea or tris- to hexamethylolmelamine, are used as component (b).

10. Adsorbent according to any one of claims 1 to 9, characterised in that the components ($a_1$) or ($a_2$) with (b) together contain at least two, unetherified or etherified N-methylolamide groups.

11. Process for producing an anionic adsorbent, characterised in that
($a_1$) an anionic compound of the formula

(1) Z-Q-CO-N-X,
|
Y

wherein
X is hydrogen or $-CH_2OH$,
Y is hydrogen, lower alkyl or $-CH_2OH$,
Q is alkylene having 1 to 8 carbon atoms, and
Z is the acid radical of a polybasic, inorganic acid containing oxygen, or
-CO-Q-Z is the acid radical of a dicarboxylic acid containing this inorganic acid radical, in which the terminal carboxyl group of the dicarboxylic acid is optionally replaced by the group of the formula

(1a), X-N-CO- or
|
Y

($a_2$) a melamine compound containing at least one N-methylol group and at least one N-sulfo-$C_1$-$C_3$-alkyl group or at least one sulfated N-methylol group,
is reacted with
(b) a free or etherified addition product of formaldehyde with a urea, thiourea or amino-1,3,5-triazine compound.

12. Process according to claim 11, characterised in that the reaction is performed in the presence of a catalyst, preferably sulfamic acid.

13. Use of the anionic adsorbents, such as are defined in claims 1 to 10, for the removal of cationic substances from aqueous solutions.

**Claims for the Contracting State: AT**

1. Process for producing an anionic adsorbent, characterised in that
($a_1$) an anionic compound of the formula

(1) Z-Q-CO-N-X,
|
Y

wherein
X is hydrogen or $-CH_2OH$,
Y is hydrogen, lower alkyl or $-CH_2OH$,
Q is alkylene having 1 to 8 carbon atoms, and
Z is the acid radical of a polybasic, inorganic acid containing oxygen, or
-CO-Q-Z is the acid radical of a dicarboxylic acid containing this inorganic acid radical, in which the terminal carboxyl group of the dicarboxylic acid is optionally replaced by the group of the formula

(1a) X-N-CO-
|
Y

($a_2$) a melamine compound containing at least one N-methylol group and at least one N-sulfo-$C_1$–$C_3$-alkyl group or at least one sulfated N-methylol group,

is reacted with

(b) a free or etherified addition product of formaldehyde with a urea, thiourea or amino-1,3,5-triazine compound, or a mixture of their addition products.

2. Process according to claim 1, characterised in that the reaction is performed in the presence of a catalyst, preferably sulfamic acid.

3. Process according to either of claims 1 and 2, characterised in that the component ($a_1$) is a compound of the formula (1) wherein Z is the sulfonic acid group or phosphoric acid group.

4. Process according to any one of claims 1 to 3, characterised in that the component ($a_1$) is a compound of the formula (1) wherein Q is $C_1$–$C_3$-alkylene or preferably $C_2$–$C_3$-alkylene.

5. Process according to either of claims 1 and 2, characterised in that the component ($a_1$) is a compound of the formula

(2) 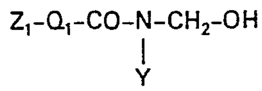

wherein

$Q_1$ is $C_1$–$C_3$-alkylene or $C_1$–$C_3$-alkylene which is substituted by -COOH or the group of the formula

(2a) 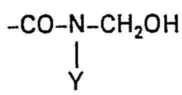 and

$Z_1$. is $-SO_3M$ or 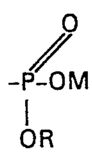

R is lower alkyl or M,

M is hydrogen, an alkali metal or ammonium, and

Y has the meaning given in claim 1.

6. Process according to claim 5, characterised in that the component ($a_1$) is a compound of the formula (2) wherein

$Q_1$ is $C_2$–$C_3$-alkylene,

$Z_1$ is $-SO_3M$, and

Y is hydrogen or $-CH_2OH$.

7. Process according to either of claims 1 and 2, characterised in that the component ($a_2$) is a methylolmelamine compound of the formula

(3) 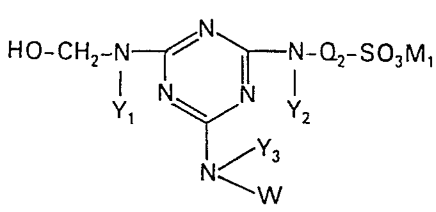

wherein

W is hydrogen, $-CH_2OH$ or $-Q_2-SO_3M_1$,

$Y_1$ is hydrogen, lower alkyl, $-CH_2OH$ or $-Q_2-SO_3M_1$,

$Y_2$ and $Y_3$ independently of one another are hydrogen, lower alkyl or $-CH_2OH$,

$Q_2$ is $C_2$–$C_3$-alkylene, and

$M_1$ is hydrogen, sodium, potassium or ammonium.

8. Process according to either of claims 1 to 2, characterised in that the component ($a_2$) is a hexamethylolmelamine which contains one to five sulfated methylol groups.

9. Process according to either of claims 1 to 8, characterised in that methylolated ureas or amino-1,3,5-triazines, which are unetherified or etherified, are used as component (b).

10. Process according to claim 9, characterised in that N-methylolureas or N-methylolmelamines, and preferably monomethylolurea, dimethylolurea or tris- to hexamethylolmelamine, are used as component (b).

11. Process according to either of claims 1 to 10, characterised in that the components ($a_1$) or ($a_2$) with (b) together contain at least two, unetherified or etherified N-methylolamide groups.

**Revendications pour les états contractants: BE, CH, DE, FR, GB, IT, LI, NL, SE.**

1. Agent d'adsorption anionique, caractérisé par le fait qu'il a été préparé en faisant réagir:

($a_1$) un composé anionique de formule:

(1) 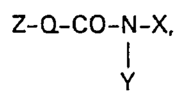

dans laquelle

X est un atome d'hydrogène ou $-CH_2OH$;

Y est un atome d'hydrogène, un groupe alkyle inférieur ou $-CH_2OH$

Q est un groupe alkylène ayant 1 à 8 atomes de carbone, et

Z est le reste d'acide d'un acide minéral, polybasique, contenant de l'oxygène, ou bien

-CO-Q-Z est le reste d'acide d'un acide carboxylique présentant ce reste d'acide minéral, les groupes terminaux carboxyliques de l'acide dicarboxylique étant éventuellement remplacés par le groupe de formule:

(1a) 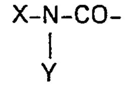

ou bien

($a_2$) un composé de mélamine qui présente au moins un groupe N-méthylol et au moins un groupe N-sulfo-$C_1$–$C_3$-alkyle ou bien au moins un groupe N-méthylol sulfaté, avec

(b) un produit d'addition, éventuellement ethérifié, du formaldéhyde sur un dérivé d'urée, de thiourée ou d'amino-1,3,5-triazine.

2. Agent d'adsorption selon la revendication 1,

caractérisé par le fait que le constituant ($a_1$) est un composé de formule (1), dans lequel Z est un groupe acide sulfonique ou acide phosphorique.

3. Agent d'adsorption selon l'une des revendications 1 et 2, caractérisé par le fait que le constituant ($a_1$) est un composé de formule (1), dans lequel Q est un groupe $C_1$-$C_3$-alkylène ou de préférence un groupe $C_2$-$C_3$-alkylène.

4. Agent d'adsorption selon la revendication 1, caractérisé par le fait que le constituant ($a_1$) est un composé de formule

(2) 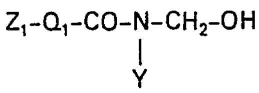

dans laquelle $Q_1$ est un groupe $C_1$-$C_3$-alkylène ou un groupe $C_1$-$C_3$-alkylène qui est substitué par -COOH ou le groupe de formule

(2a) 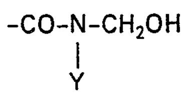

et $Z_1$ est $-SO_3M$ ou 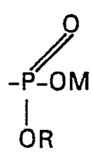

R est un groupe alkyle inférieur ou M,

M est un atome d'hydrogène, un métal alcalin ou ammonium, et

Y a les significations données dans la revendication 1.

5. Agent d'adsorption selon la revendication 4, caractérisé par le fait que le constituant ($a_1$) est un composé de formule (2), dans lequel $Q_1$ est un groupe $C_2$-$C_3$-alkylène; $Z_1$ est $-SO_3M$, et Y est un atome d'hydrogène ou $-CH_2OH$.

6. Agent d'adsorption selon la revendication 1, caractérisé par le fait que le constituant ($a_2$) est un composé méthylolmélamine de formule:

(3) 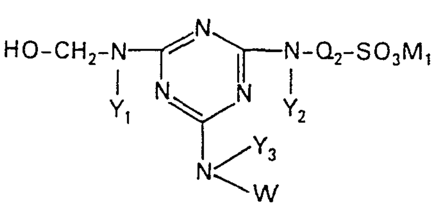

dans laquelle W est $-CH_2OH$ ou $-Q_2-SO_3M_1$, ou l'hydrogène;

$Y_1$ est un atome d'hydrogène, un groupe alkyle inférieur, $-CH_2OH$ ou $-Q_2-SO_3M_1$;

$Y_2$ et $Y_3$ indépendamment l'un de l'autre sont des atomes d'hydrogène, des groupes alkyle inférieurs ou $-CH_2OH$,

$M_1$ désigne l'hydrogène, le sodium, le potassium ou l'ammonium.

7. Agent d'adsorption selon la revendication 1, caractérisé par le fait que le constituant ($a_2$) est une hexaméthylolmélamine qui présente 1 à 5 groupes méthylol sulfatés.

8. Agent d'adsorption selon l'une des revendications 1 à 7, caractérisé par le fait qu'on utilise comme constituant (b), des urées ou des amino-1,3,5-triazines méthylolées qui sont éventuellement éthérifiées.

9. Agent d'adsorption selon la revendication 8, caractérisé par le fait qu'on utilise comme constituant (b) les N-méthylolurées ou les N-méthylolmélamines et, de préférence, la monométhylolurée, la diméthylolurée ou les tris- à hexaméthylolmélamines.

10. Agent d'adsorption selon l'une des revendications 1 à 9, caractérisé par le fait que les constituants ($a_1$) ou ($a_2$) présentent ensemble avec (b) au moins deux groupes N-méthylolamides éventuellement éthérifiés.

11. Procédé pour la préparation d'un agent d'adsorption anionique, caractérisé par le fait qu'on fait réagir

($a_1$) un composé anionique de formule:

(1) 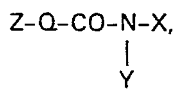

dans laquelle

X est un atome d'hydrogène ou $-CH_2OH$

Y est un atome d'hydrogène, un groupe alkyle inférieur ou $-CH_2OH$,

Q est un groupe alkylène ayant 1 à 8 atomes de carbone, et

Z est le reste d'acide d'un acide minéral, polybasique, contenant de l'oxygène, ou bien

-CO-Q-Z est le reste d'acide d'un acide dicarboxylique présentant ce reste d'acide minéral, le groupe carboxyle terminal de l'acide dicarboxylique étant éventuellement remplacé par le groupe de formule (1a)

(1a) 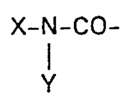

ou bien

($a_2$) un composé de la mélamine qui présente au moins un groupe N-méthylol et au moins un groupe N-sulfo-$C_1$-$C_3$-alkyle ou bien au moins un groupe N-méthylol sulfaté, avec

(b) un produit d'addition, éventuellement éthérifié, de formaldéhyde sur un dérivé de l'urée, de la thiourée ou d'une amino-1,3,5-triazine ou de leur mélange de formation.

12. Procédé selon la revendication 11, caractérisé par le fait que la réaction est effectuée en présence d'un catalyseur, de préférence l'acide sulfamique.

13. Utilisation des agents d'adsorption anioniques tels qu'ils sont définis dans les revendications 1 à 10 pour éliminer les produits cationiques des solutions aqueuses.

**Revendications pour l'Etat contractant: AT**

1. Procédé pour la préparation d'un agent

d'adsorption anionique, caractérisé par le fait qu'on fait réagir

($a_1$) un composé anionique de formule:

(1) 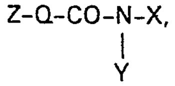

dans laquelle

X est un atome d'hydrogène ou $-CH_2OH$;

Y est un atome d'hydrogène, un groupe alkyle inférieur ou $-CH_2OH$

Q est un groupe alkylène ayant 1 à 8 atomes de carbone, et

Z est le reste d'acide d'un acide minéral, polybasique, contenant de l'oxygène, ou bien

-CO-Q-Z est le reste d'acide d'un acide carboxylique présentant ce reste d'acide minéral, les groupes terminaux carboxyliques de l'acide dicarboxylique étant éventuellement remplacés par le groupe de formule:

(1a) 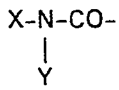

ou bien

($a_2$) un composé de mélamine qui présente au moins un groupe N-méthylol et au moins un groupe N-sulfo-$C_1$-$C_3$-alkyle ou bien au moins un groupe N-méthylol sulfaté, avec

(b) un produit d'addition, éventuellement éthérifié, du formaldéhyde sur un dérivé d'urée, de thiourée ou d'amino-1,3,5-triazine ou sur leur mélange de formation.

2. Procédé selon la revendication 1, caractérisé par le fait que la réaction est effectuée en présence d'un catalyseur, de préférence l'acide sulfamique.

3. Procédé selon l'une des revendications 1 et 2, caractérisé par le fait que le constituant ($a_1$) est un composé de formule (1) dans lequel Z est le groupe acide sulfonique ou acide phosphorique.

4. Procédé selon l'une des revendications 1 à 3, caractérisé par le fait que le constituant ($a_1$) est un composé de formule (1), dans lequel Q est un groupe $C_1$-$C_3$-alkylène ou de préférence $C_2$-$C_3$-alkylène.

5. Procédé selon l'une des revendications 1 et 2, caractérisé par le fait que le constituant ($a_1$) est un composé de formule

(2) 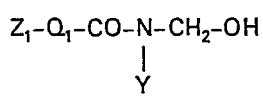

dans laquelle $Q_1$ est un groupe $C_1$-$C_3$-alkylène ou un groupe $C_1$-$C_3$-alkylène qui est substitué par -COOH ou le groupe de formule

(2a) 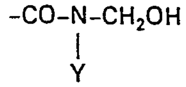

et $Z_1$ est $-SO_3M$ ou 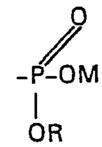

R est un groupe alkyle inférieur ou M,

M est un atome d'hydrogène, un métal alcalin ou ammonium, et

Y a les significations données dans la revendication 1.

6. Procédé selon la revendication 5, caractérisé par le fait que le constituant ($a_1$) est un composé de formule (2), dans lequel $Q_1$ est un groupe $C_2$-$C_3$-alkylène; $Z_1$ est $-SO_3M$, et Y est un atome d'hydrogène ou $-CH_2OH$.

7. Procédé selon l'une des revendications 1 et 2, caractérisé par le fait que le constituant ($a_2$) est un composé méthylolmélamine correspondant à la formule:

(3) 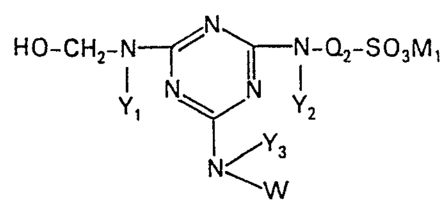

dans laquelle W est un atome d'hydrogène, $-CH_2OH$ ou $-Q_2-SO_3M_1$;

$Y_1$ est un atome d'hydrogène, un groupe alkyle inférieur, $-CH_2OH$ ou $-Q_2-SO_3M_1$;

$Y_2$ et $Y_3$ indépendamment l'un de l'autre sont des atomes d'hydrogène, des groupes alkyle inférieurs ou $-CH_2OH$,

$Q_2$ est un groupe $C_2$-$C_3$-alkylène, et

$M_1$ désigne l'hydrogène, le sodium, le potassium ou l'ammonium.

8. Procédé selon l'une des revendications 1 et 2, caractérisé par le fait que le constituant ($a_2$) est une hexaméthylolmélamine qui présente 1 à 5 groupes méthylol sulfatés.

9. Procédé selon l'une des revendications 1 à 8, caractérisé par le fait qu'on utilise comme constituant (b), des urées ou des amino-1,3,5-triazines méthylolées qui sont éventuellement éthérifiées.

10. Procédé selon la revendication 9, caractérisé par le fait qu'on utilise comme constituant (b) les N-méthylolurées ou les N-méthylolmélamines et, de préférence, la monométhylolurée, la diméthylolurée ou les tris- à hexaméthylolmélamines.

11. Procédé selon l'une des revendications 1 à 10, caractérisé par le fait que les constituants ($a_1$) ou ($a_2$) présentent ensemble avec le constituant (b) au moins deux groupes N-méthylolamides éventuellement éthérifiés.